# EUROPEAN PATENT APPLICATION

(11) **EP 3 907 204 A1**
(43) Date of publication of application: **10.11.2021**
(21) Application number: 19907772.8
(22) Date of filing: 11.03.2019
(51) Int. Cl.: C04B 28/12, C04B 111/28

(54) **HEAT INSULATION PLATE RAW MATERIAL COMPOSITION, HEAT INSULATION PLATE, AND PRODUCTION PROCESS FOR HEAT INSULATION PLATE**

(30) Priority: 02.01.2019 CN 201910001705; 02.01.2019 CN 201910001725
(71) Applicant: Shanghai Shengkui Products Co., Ltd, Caojing Town, Jinshan District Shanghai 201507 (CN)
(72) Inventor: LIU, Bingqiang, Jinshan District, Shanghai 201507 (CN); LIU, Nianjie, Jinshan District, Shanghai 201507 (CN)
(74) Representative: Grünecker Patent- und Rechtsanwälte PartG mbB
(86) International application number: PCT/CN2019/077654
(87) International publication number: WO 2020/140327

(57) **Abstract**

A heat insulation plate raw material composition, a heat insulation plate, and a production process for the heat insulation plate. The components in parts by weight of the heat insulation plate raw material composition comprise: 60-80 parts of a siliceous substance, 17-28 parts of a binder, 5-8 parts of polystyrene particles, and 20-60 parts of water, wherein the binder comprises calcium oxide and/or calcium hydroxide. The tensile strength of the prepared heat insulation plate is 0.2Mpa or above, the compressive strength is 0.3Mpa or above, the bending deformation is 4mm or above, the heat conductivity coefficient is 0.055W/(m·K) or below at 25°C, the volume water absorption rate is 5.5% or below, and the fireproof grade is non-combustible, i.e., being not lower than A2 grade.

## Description

The present application claims the priority of the Chinese patent application CN201910001705.8 with the filing date of January 2, 2019 and the priority of the Chinese patent application CN201910001725.5 with the filing date of January 2, 2019. The present application quotes the full text of the aforementioned Chinese patent applications.

### Technical Field

The present disclosure relates to a field of building materials, especially relates to a heat insulation plate raw material composition, heat insulation plate, and production process for the heat insulation plate.

### Background arts

At present, the heat insulation materials used in external wall insulation are mainly divided into two categories: inorganic heat insulation materials and organic heat insulation materials, but these materials generally have the shortcoming that energy saving and fire prevention cannot be balanced. Organic materials have poor heat resistance and are easy to burn, and they will release a lot of heat and produce a lot of toxic fumes when burning, which will not only accelerate the spread of the fire, but also easily cause casualties to trapped personnel and rescuers. Once in a fire, it will burn rapidly, and it is easy to produce dripping and melting, which can accelerate or spread the fire. Inorganic materials have low tensile strength, which causes the entire insulation layer to fall off, resulting in accidents that cause personnel and financial losses.

At present, there are two types of modified polystyrene insulation plates in the prior art. One is made by mixing the foamed phenolic resin as the continuous phase mixture and the foamed polystyrene particles as the dispersed phase, and then cutting after heating, pressurizing, foaming and curing. According to the requirements of DG/TJ08-2212-2016 "Technical Regulations for the Application of Thermosetting Modified Polystyrene Plate Insulation System", the density of this type of plate is 35-55kg/m³, and the thermal conductivity is less than 0.039W/(m·K), but its combustibility can only reach Class B (flame-retardant). The other type of heat insulation plate is made of inorganic cementing materials, graphite polystyrene particles, and various additives through mixing and stirring, molding, extrusion casting, natural curing or steam curing, and other processes, and then cutting. According to the "Technical Standards for the Application of Inorganic Modified Non-combustible Heat Insulation Plates for External Wall Insulation Systems", the density is less than 170kg/m³, the heat conductivity coefficient is less than 0.052W/(m·K), and the combustion performance can reach A2 grade. But this type of plate is very brittle, the size should be less than 1200mm×600mm, otherwise it is easy to break. According to the standard requirements, the tensile strength of the vertical surface only needs to be greater than 0.10MPa, and the strength requirement is not high.

### Content of the present invention

The technical problem to be solved by the present invention is to overcome the shortcomings of insufficient tensile strength and fireproof grade of the heat insulation plate in the prior art, and to provide an heat insulation plate which has high tensile strength, small bending deformation, and is not easy to fall off after being pasted (tensile strength is 0.2MPa or above, compressive strength is 0.3MPa or above, bending deformation is 4mm or above), and has good thermal insulation performance (heat conductivity coefficient is 0.055W/(m·K) or below at 25°C). And the volume water absorption rate of the product is 5.5% or below, and the fire-proof grade is non-combustible, i.e., being not lower than A2 grade.

The present disclosure solves the above-mentioned technical problems through the following technical solutions:

A heat insulation plate raw material composition, the components in parts by weight thereof comprise: 60 to 80 parts of a siliceous substance, 17 to 28 parts of a binder, 5 to 8 parts of polystyrene particles, and 20 to 60 parts of water, wherein, the binder comprises calcium oxide and/or calcium hydroxide.

A heat insulation plate raw material composition, the components in parts by weight thereof are 60 to 80 parts of a siliceous substance, 17 to 28 parts of a binder, 5 to 8 parts of polystyrene particles, and 20 to 60 parts of water, wherein, the binder comprises calcium oxide and/or calcium hydroxide. The siliceous material and the binder can make the heat insulation plate have higher strength and toughness, specifically, the tensile strength is 0.2Mpa or above, compressive strength is 0.3Mpa or above, and bending deformation is 4mm or above. Polystyrene particles can make the heat insulation plate have good insulation performance, specifically, the heat conductivity coefficient is 0.055W/(m·K) or below at 25°C. The combination of siliceous substance, binder and polystyrene particles can make the heat insulation plate have a lower water absorption rate and a higher fireproof grade, specifically, the volume water absorption rate is 5.5% or below, and the fireproof grade is not lower than A2 grade.

Preferably, the heat insulation plate raw material composition further includes additives. The additives include one or more than one kinds of water reducing agent, water repellent, redispersible latex powder, cellulose ether, graphite and foaming agent. Additives can further improve the performance of the heat insulation plate. In one or more than one embodiments, adding a certain amount of water reducing agent and cellulose ether can make the bending deformation reach 6 mm or above.

Preferably, the additives include water reducing agent and cellulose ether. According to parts by weight, the sum of the weight of the water reducing agent, the cellulose ether and the polystyrene particles is A, and the sum of the weight of the siliceous substance and the binder is B, and B:A is 93:7 to 91:9. By specifying the preferred weight ratio of inorganic substances to organic substances from 93:7 to 91:9, the performance of the heat insulation plate can be further improved, especially when B:A is 92:8, the compressive strength is 0.35Mpa or above, the tensile strength is 0.23Mpa or above, and the bending deformation is 7.11mm or above, which shows excellent performance.

Preferably, the weight parts ratio of the siliceous substance to the binder is 8:2 to 7:3. When the weight parts ratio of the siliceous substance to the binder is 8:2 to 7:3, the comprehensive performance of the heat insulation plate can be improved, and various indicators can be more balanced and optimized. Especially when the weight parts ratio of the siliceous substance to the binder is 7:3, the compressive strength is 0.34MPa or above, the tensile strength is 0.24MPa or above, the bending deformation is 6.56mm or above, and the volume water absorption rate is 5.12% or below, overall performance is excellent.

Preferably, the siliceous substance includes one or more than one kinds of active silicon micro powder, micro silicon powder, coal ash, slag powder, quartz powder, kaolin, bentonite, water glass, and diatomaceous earth. Conventional siliceous substances can be used in the present invention as long as they can provide silicon that can react with calcium oxide and/or calcium hydroxide.

Preferably, the polystyrene particles are also graphite polystyrene particles containing graphite. The addition of graphite and other materials can gradually shorten the initial setting time of the mixture and reduce the fluidity of the mixture. The main function is to improve the bending performance and enhance the compressive strength and bending strength of the product and reduce the heat conductivity coefficient to enhance the insulation effect.

Preferably, in the heat insulation plate raw material composition, the weight ratio of the polystyrene particles to the "raw materials other than the water and the polystyrene particles" is 5.25:94.75, 6.25:93.74 or 7.25:92.75;
preferably, the amount of the water reducing agent is 1 to 2 parts, preferably 1 to 1.5 parts, more preferably 1.4 parts, 1.45 parts, or 1.5 parts;
preferably, the amount of the cellulose ether is 1 to 5 parts, preferably 2 to 4 parts, more preferably 2 parts, 3 parts, or 4 parts.

Preferably, the amount of the siliceous substance is 70 to 80 parts;
preferably, the amount of the binder is 18-28 parts;
preferably, the amount of the polystyrene particles is 7 to 8 parts;
preferably, the amount of water is 20 to 30 parts.

Preferably, the amount of the siliceous substance is 70 to 75 parts;
preferably, the amount of the binder is 18-19 parts;
preferably, the amount of the polystyrene particles is 7 to 7.5 parts;
preferably, the amount of water is 25-30 parts.

Preferably, the amount of the siliceous substance is 72.8 parts, 73.6 parts or 74.4 parts;
preferably, the amount of the binder is 18.2 parts, 18.4 parts or 18.6 parts;
preferably, the amount of the polystyrene particles is 7.25 parts;
Preferably, the amount of water is 29 parts.

Preferably, the heat insulation plate raw material composition includes the following components in parts by weight: 70 to 80 parts of the siliceous substance, 17 to 19 parts of the calcium oxide and/or calcium hydroxide, and 5 to 8 parts of the polystyrene particles, 20 to 30 parts of the water, 2 to 4 parts of the cellulose ether, and 1 to 1.5 parts of the water reducing agent.

A heat insulation plate, the raw material of the heat insulation plate is the above-mentioned heat insulation plate raw material composition, and the heat insulation plate is obtained by the following method I or method II:
Method I: the pre-mixed raw material composition of the heat insulation plate is pressurized, heated, and solidified in the mold;
Method II: the pre-mixed heat insulation plate raw material composition is first pressurized and maintained under pressure, and then heated to solidify and shape in the mold.

Preferably, in Method I or Method II, the pre-mixing operation is carried out as follows: at 10-30°C, the foamed polystyrene particles and the remaining materials of the raw material composition are uniformly mixed;
preferably, in Method I or Method II, the pressure after pressurization is 0.3MPa-235MPa; preferably, the pressure after pressurization is 0.3MPa-5MPa.

Preferably, in Method I or Method II, when heating, the set temperature of the heating device is 100-150°C. Preferably, the set temperature of the heating device is 110-130°C.

Preferably, the foamed polystyrene particles are prepared by the following steps: the polystyrene particles are heated at 100-120°C to expanse and increase the volume;
preferably, in Method I or Method II, the heating time of the heating device is 35 minutes or more.

A process for a flexible heat insulation plate, comprising mixing the raw material composition including 60-80 parts of siliceous substance, 17-28 parts of binder, 5-8 parts of polystyrene particles and 20-60 parts of water uniformly to obtain a mixture, pouring the mixture into a mold, pressurizing the mold and remaining the pressure, and heating the mold so that the temperature inside the mixture reaches 100-150°C and the pressure applied to the mold reaches 0.3MPa-235MPa, keeping for 35 minutes or more, de-moulding and curing.

Preferably, the siliceous substance is micro silicon powder, the amount is 70 to 80 parts.

Preferably, the binder is calcium oxide and/or calcium hydroxide, the amount is 18-28 parts.

Preferably, the amount of the polystyrene particles is 7 to 8 parts.

Preferably, the amount of water is 20 to 30 parts.

Preferably, the siliceous substance includes one or more than one kinds of active silicon micro powder, micro silicon powder, coal ash, slag powder, quartz powder, kaolin, bentonite, water glass, and diatomaceous earth.

Preferably, the polystyrene particles are also graphite polystyrene particles containing graphite.

Preferably, the amount of the siliceous substance is 70 to 75 parts.

Preferably, the amount of the binder is 18-19 parts.

Preferably, the amount of the polystyrene particles is 7 to 7.5 parts.

Preferably, the amount of water is 25 to 30 parts.

Preferably, the mold includes an upper mold and a lower mold. The upper mold and the lower mold are used to preliminarily shape the mixture. After the mold is put in the pressing platform, the upper mold and the lower mold are locked until the mixture is compressed by 10-45% in the thickness direction and shaped.

Preferably, the mixture is compressed by 17-38% in the thickness direction and shaped.

Preferably, multiple sets of molds are sequentially and repeatedly stacked for pressing multiple heat insulation plates at the same time until the mixture is compressed by 10-45% in the thickness direction and shaped.

Preferably, the heating temperature inside the mixture is 100-120°C.

Preferably, the pressure inside the mixture is 0.3 MPa to 1 MPa.

Preferably, the duration time of heating and pressurizing the mixture is 35 minutes to 24 hours.

Preferably, the duration time of heating and pressurizing the mixture is 35 minutes to 60 minutes.

Preferably, the process further comprises placing a steel mesh or a rib in the mold, so that at least one side of the mixture is embedded with the steel mesh or the rib.

Preferably, before the mixture is stirred, one-time foaming step of the polystyrene particles is comprised, and the one-time foaming step comprises heating and pressurizing the polystyrene particles to foam.

The above preferred conditions of the present invention may be arbitrarily combined based on the general knowledge in the art to obtain the preferred embodiments of the present invention.

The positive effects of the present invention lies on that the heat insulation plate prepared by the present invention has high tensile strength, small bending deformation, and is not easy to fall off after being pasted (tensile strength is 0.2Mpa or above, compressive strength is 0.3Mpa or above, bending deformation is 4mm or above), and good thermal insulation performance (the heat conductivity coefficient is 0.055W/(m·K) or below at 25°C), the volume water absorption rate is 5.5% or below, and the fireproof grade is non-combustible, i.e., being not lower than A2 grade.

### Brief description of the drawings

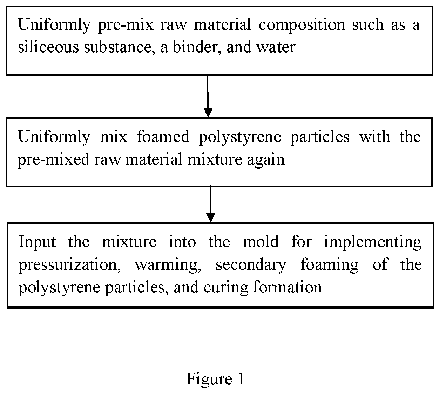

Fig.1 is a schematic diagram of the process of the heat insulation plates of Examples 1-9 and Comparative Examples 1-11 of the present invention.
Fig. 2 is a schematic diagram of the structure of the mold in the pressing platform in the process of the Examples 1-9 and the Comparative Examples 1-11 of the present invention.

### Description of references in the drawings:

Mold 1
Upper Mold 2
Lower Mold 3
Pressing Platform 4

### Detailed description of the preferred embodiment

The following examples further illustrate the present disclosure, but the present disclosure is not limited thereto. In the following examples, the experimental methods without specific conditions are conducted according to conventional methods and conditions, or according to the product specification.

The materials could be used in each example and comparative example in the present invention are specifically illustrated as below:
Micro-silica powder: 1250 mesh (also known as silica fume), purchased from Shanghai Victory Industrial Development Co., Ltd.
Quartz powder: 600 mesh (also called silicon micro powder), purchased from Huzhou Huatian Micro Powder Factory
Cement: 525#, purchased from Shanghai Xieqing Industrial Co., Ltd.
Coal ash: Class C high-calcium ash, purchased from Shanghai Commodity Fly Ash Products Co., Ltd.
Sodium silicate: also known as water glass, purchased from Yicheng Jingrui New Material Co., Ltd.
Sodium fluorosilicate: purchased from Yicheng Jingrui New Material Co., Ltd.
Water reducing agent: HF retarding high-efficiency water reducing agent, purchased from Shanghai Dongda Chemical Co., Ltd.
Redispersible latex powder: purchased from Guangdong Longhu Technology Co., Ltd.
Cellulose ether: purchased from Oujin Chemical Co., Ltd.
Reinforcing fiber: chopped glass fiber, purchased from Oujin Chemical Co., Ltd.
Graphite: purchased from Liaoyang Xingwang Graphite Products Co., Ltd.
Calcium oxide: also known as quicklime, purchased from Taicang Dongfang Metallurgical Lime Product Factory
Foaming agent: carbonate or calcium carbonate, purchased from Guangzhou Jiangyan Chemical Co., Ltd.
Hydrophobic agent: Organosilicon hydrophobic agent, purchased from Shanghai Xianbang Chemical Co., Ltd.
Light burned magnesium oxide: remade, purchased from Shandong Jiuchong Chemical Co., Ltd.
Magnesium sulfate heptahydrate: purchased from Shandong Jiuchong Chemical Co., Ltd.
Polystyrene particles: purchased from Wuxi Xingda Foam New Material Co., Ltd.

The raw material composition and amount used for the heat insulation plates of Examples 1-5 were shown in Table 1 below. The raw material composition and amount used for the heat insulation plates of Examples 6-9 were the same as those of

### Example 2.

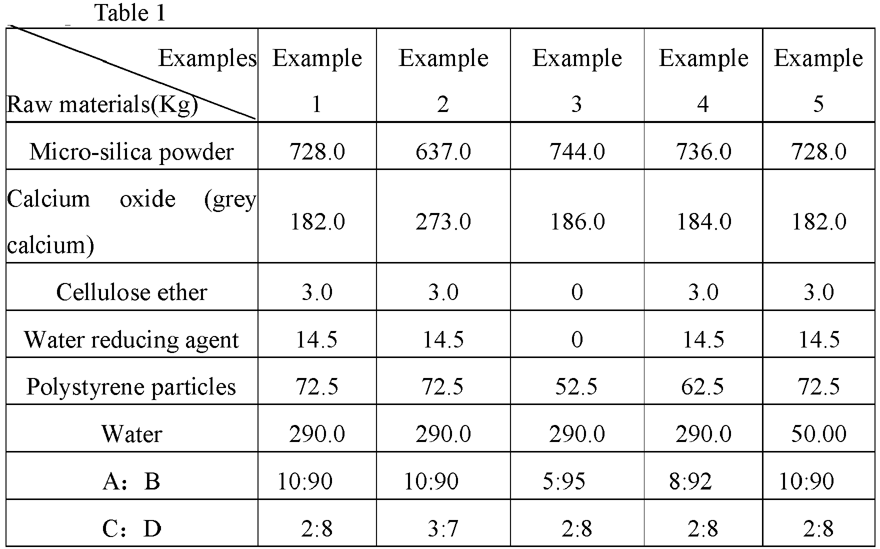

Note: In Table 1, A referred to the amount of polystyrene particles, cellulose ether and water reducing agent, B referred to the amount of micro-silica powder and calcium oxide; C referred to the amount of calcium oxide, and D referred to the amount of micro-silica powder. The data in Table 1 were all divided by 10 to obtain the value of parts, wherein each part represented 10Kg. Table 1 only included specific examples. Those skilled in the art could appropriately select the weight value represented by each part according to the actual situation.

The preparation methods of the heat insulation plates of Examples 1-9 and Comparative Examples 1-15 were shown as 1.

Firstly, the polystyrene particles were expanded by heating, the volume was increased and one-time foamed polystyrene particles were obtained. The density was changed accordingly by setting the steam pressure to meet the required density requirements. The steam pressure was set to 0.2MPa, the temperature was set to 100°C, the time was set to 30 seconds, the pressure was maintained for 10 seconds and reduced for 3 seconds.

Then, water, micro-silica powder, calcium oxide, cellulose ether and water reducing agent were mixed and stirred uniformly at 10-30°C (the stirring time was adjusted with the change of the temperature, and the speed of the stirrer was set to 300 rpm/min), so that all of them were evenly stirred to become a premixed gelling material.

Then, the one-time foamed polystyrene particles were added to the mixing tank, and the premixed gelling material was put into the mixing tank after the mixer was turned on, the mixture was fully uniformly mixed. After repeated tests, the stirring speed should be set at 100 rpm and the time last for 5 minutes. If the speed was too fast or the stirring time was too long, the polystyrene particles would shrink and deform. In addition, the bulk density of the added polystyrene material could be adjusted according to the bulk density of the actual demand.

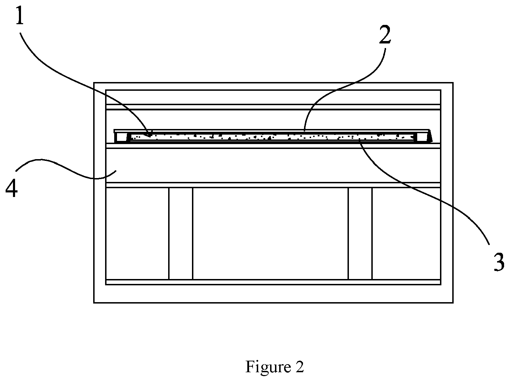

Then the stirred mixture (containing foamed polystyrene particles) was put into mold 1 (the vertical height of the mold could be adjusted under pressure until it reached the set height, and the mold 1 was lined with 1mm thick cellophane to facilitate later demolding). As shown in Figure 2, the mold 1 included an upper mold 2 and a lower mold 3. The raw material composition was preliminarily shaped by the upper mold 2 and the lower mold 3. When the mold 1 was put in the pressing platform, the mold 1 was extruded until the raw material composition was compressed by 10-45% in the thickness direction to shape, and the upper mold 2 and the lower mold 3 were locked. As the material shrank in a certain proportion after being heated and pressurized, after repeated tests, it was found that took the product thickness of 5cm as an example, the height of the level gauge needed to be adjusted to 6-9cm, and the shrinkage ratio was 10-45%. The internal pressure of the raw material composition was maintained at 0.3 MPa or above. And in order to avoid unevenness in the process that the mixture was put into the mold, the transmission speed should be set at 1m per minute for the best.

Before the mold was put in the pressing platform 4, the temperature of the oil temperature machine was set to between 100-150°C to preheat the pressing platform. When the temperature reached the set value, the mold 1 was pushed in, pressurized for more than 35 minutes to shape, and allowed to cool down naturally and demolded after molding. In the process of heating and pressurization, the polystyrene particles were foamed for the second time in the mold, so that the density was further improved and the tensile strength was also improved.

Finally, the product after demolding was cured in a curing room. The curing room needed to be dry and ventilated. The curing time was generally about 5-10 days, depending on the temperature and humidity.

The specific parameter settings of the process of the heat insulation plates of Examples 1-9 were shown in Table 2. Wherein, in Example 6, a steel mesh was placed in the mold so that the steel mesh was embedded in both sides of the raw material composition. In Example 9, ribs were placed in the mold so that ribs were embedded in both sides of the raw material composition.

**Table 2**

| Parameters | Example 1 | Example2 | Example3 | Example4 | Example 5 | Example6 | Example7 | Example 8 | Example9 |
|---|---|---|---|---|---|---|---|---|---|
| Pressure (MPa) | 0.3 | 0.3 | 0.3 | 0.3 | 0.3 | 0.3 | 0.3 | 0.3 | 0.3 |
| Compression ratio (%) | 28 | 28 | 28 | 28 | 28 | 28 | 17 | 38 | 44 |
| Time(min) | 35 | 35 | 35 | 35 | 35 | 35 | 35 | 35 | 35 |
| Temperature (°C) | 100 | 110 | 120 | 130 | 140 | 150 | 110 | 110 | 110 |

Note: The pressure in the above table was the pressure exerted on the mixture. The compression ratio was the reduction in the thickness of the mixture compared to the initial thickness of the mixture. The time was the time for the mixture to be heated and pressurized. After more than 60 minutes, it would have little effect on the performance of the heat insulation plate. From the economic point of view, heating time should not exceed 24 hours, preferably within 60 minutes. The temperature was the time for heating the mixture.

### Comparative Examples 1-4

The parameters in the process of Comparative Examples 1-4 were the same as those of Example 2, and the raw material composition and amount used for the heat insulation plate were shown in Table 3.

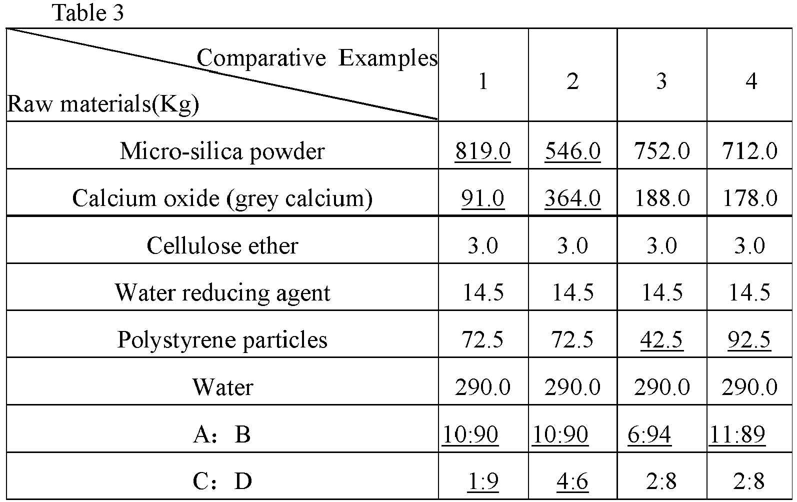

Note: In Table 1, A referred to the amount of polystyrene particles, cellulose ether and water reducing agent, B referred to the amount of micro silica powder and calcium oxide; C referred to the amount of calcium oxide, and D referred to the amount of micro silica powder. The data in Table 1 were all divided by 10 to obtain the value of parts, wherein each part represented 10Kg. Table 1 only included specific examples. Those skilled in the art can appropriately select the weight value represented by each part according to the actual situation.

### Comparative Examples 5-15

The parameters in the process of heat insulation plates of Comparative Examples 5-15 were shown in Table 4, the raw material composition was the same as that of Example 2, other parameters were the same as those of Example 2.

**Table 4**

| Paramet ers | compa rative examp le 5 | compa rative examp le 6 | compa rative examp le 7 | compa rative examp le 8 | compa rative examp le 9 | compa rative examp le 10 | compa rative examp le 11 | compa rative examp le 12 | compa rative examp le 13 | compa rative examp le 14 | compar ative exampl e 15 |
|---|---|---|---|---|---|---|---|---|---|---|---|
| Pressur e(MPa) | 0.3 | **0.2** | **0.2** | **0.2** | **0.2** | **0.2** | **0.2** | 0.3 | 0.3 | 0.3 | 0.3 |
| Compre ssion Ratio (%) | 28 | 28 | 28 | 28 | 28 | 28 | 28 | 28 | 28 | **0** | **50** |
| Time (min) | 35 | 35 | 35 | 35 | 35 | 35 | 35 | 35 | **30** | 35 | 35 |
| Temper ature (°C) | **90** | 100 | 110 | 120 | 130 | 140 | 150 | **160** | 110 | 110 | 110 |

### Examples of Effects

Performance tests were performed on the samples prepared in the Examples 1-9 and Comparative Examples 1-15. The testing standards were as follows: compressive strength was tested according to GB/T 5486-2008 "Test Methods for Inorganic Rigid Thermal Insulation Products", and the tensile strength perpendicular to the plate surface was tested according to GB/T 29906-2013 "External thermal insulation composite systems based on expanded polystyrene", burning performance grade was tested according to GB 8624-2012 "Burning performance classification of building materials and products", and the bending deformation was tested according to GB/T 10801.1 "Molded polystyrene foam plastic for thermal insulation", volume water absorption rate was tested according to GB/T 1034-2008 "Determination of Water Absorption of Plastics". Wherein, the bending load, impact strength, elastic modulus were tested using a universal testing machine.

If the specific values of the process parameters of Examples 1-5 were not limited, but only the pressure of Examples 1-5 was randomly set at 0.3Mpa or above, the compression ratio was randomly set between 10% and 45%, and the time was set randomly for no less than 35 minutes, the temperature was randomly set between 100-150°C, then the mechanical performance parameters of Examples 1-5 were shown in Table 5.

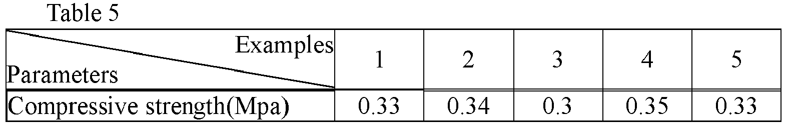

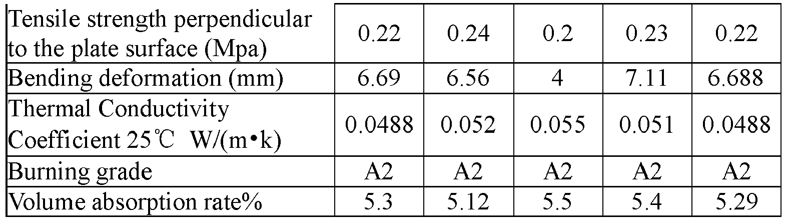

If the pressure, compression ratio, time and temperature of each Examples 1-9 were specifically limited according to Table 2, the detection results were shown in Table 6 below.

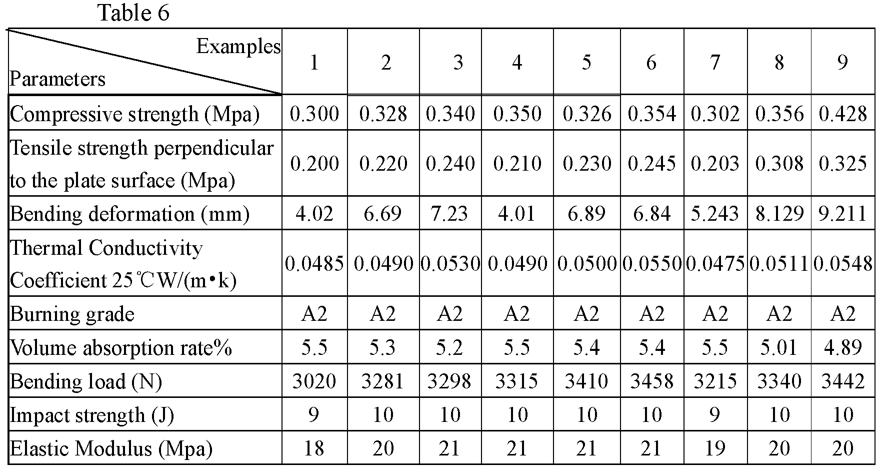

The testing results of samples of Comparative Examples 1-4 were shown in Table 7.

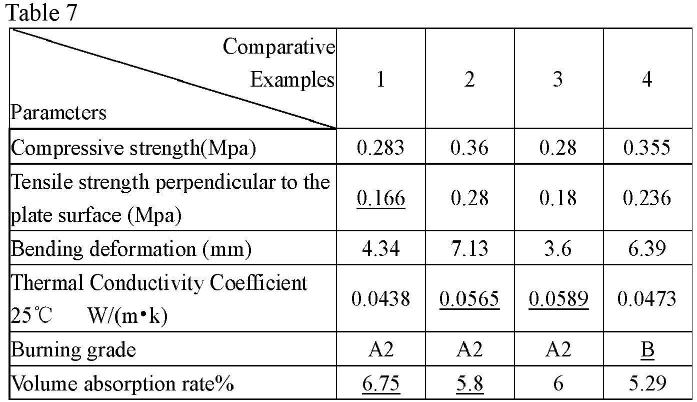

Performance tests were performed on the heat insulation plate samples prepared in Comparative Examples 5-15, and the testing results were shown in Table 8 below.

**Table 8**

| Paramete rs | Compara tive Example 5 | Compara tive Example 6 | Compara tive Example 7 | Compara tive Example 8 | Compara tive Example 9 | Compara tive Example 10 | Compara tive Example 11 | Compara tive Example 12 | Compara tive Example 13 | Compara tive Example 14 | Compara tive Example 15 |
|---|---|---|---|---|---|---|---|---|---|---|---|
| Compress ive strength (Mpa) | **0.234** | **0.210** | **0.230** | **0.240** | **0.235** | **0.279** | **0.280** | **0.287** | **0.155** | **0.249** | 0.458 |
| Tensile strength perpendic ular to the plate surface (Mpa) | **0.187** | **0.180** | **0.185** | **0.228** | **0.199** | 0.221 | 0.238 | 0.297 | **0.12** | **0.146** | 0.356 |
| Bending deformati on (mm) | 2.63 | 3.89 | 6.13 | 7.13 | 3.42 | 6.13 | 6.30 | 7.36 | 3.124 | 3.217 | 9.342 |
| Thermal Conducti vity Coefficie nt 25°C W/(m•k) | 0.0465 | 0.0483 | 0.0485 | 0.5310 | 0.0488 | 0.0505 | **0.0552** | **0.0575** | **0.056** | 0.0478 | **0.0563** |
| Burning grade | A2 | A2 | A2 | A2 | A2 | A2 | A2 | A2 | A2 | A2 | A2 |
| Volume water absorptio n rate% | **8.2** | **8.1** | **6.0** | 5.3 | **7.3** | **6.2** | **5.6** | 5.2 | **9.32** | **7.37** | 4.63 |
| Bending load (N) | 2896 | 2860 | 3015 | 3180 | 3220 | 3304 | 3358 | 3506 | 1800 | 3182 | 3485 |
| Impact strength (J) | 8 | 8 | 9 | 9 | 9 | 9 | 9 | 10 | 3 | 9 | 10 |
| Elastic Modulus (Mpa) | 15 | 16 | 18 | 19 | 19 | 19 | 19 | 21 | 8 | 19 | 20 |

Combining Examples 1-9 and Comparative Examples 1-15, it could be seen that the siliceous material in Comparative Example 1 exceeded 80 parts by weight. As a result, the tensile strength was 0.2 Mpa or below, and the volume water absorption rate was higher than 6.7%. The siliceous material in Comparative Example 2 was less than 60 parts by weight, and as a result, the thermal conductivity coefficient was higher than 0.055W/(m·K) at 25°C. The polystyrene particles in Comparative Example 3 was less than 5 parts by weight, and as a result, the thermal conductivity coefficient was higher than 0.055W/(m·K) at 25°C. The polystyrene particles in Comparative Example 4 exceeded 8 parts by weight, and as a result, the fireproof grade was B grade.

Since the pressure of Comparative Examples 6-11 was less than 0.3 MPa, the compressive strength was less than 0.3 MPa. In Comparative Example 5, because the temperature was less than 100°C, the compressive strength was less than 0.25 MPa, the tensile strength was less than 0.19 MPa, and the volume water absorption rate was greater than 8%. In Comparative Example 12, since the heating temperature exceeded 150°C, the compressive strength was less than 0.29MPa, and the thermal conductivity coefficient exceeded 0.055W/(m·K) at 25°C. In Comparative Example 13, because the heating time was less than 30 minutes, the compressive strength was less than 0.16MPa, the tensile strength was less than 0.13MPa, the thermal conductivity coefficient exceeded 0.055W/(m·K) at 25°C, and the volume water absorption rate exceeded 9%. Since Comparative Example 14 omitted compression process, the compressive strength was less than 0.25MPa, the tensile strength was less than 0.15MPa, the thermal conductivity exceeded 0.055W/(m·K) at 25°C, and the volume water absorption rate exceeded 7%.

Although the specific embodiments of the present invention are described above, those skilled in the art should understand that these are only examples, and various changes or modifications can be made to these embodiments without departing from the principle and essence of the present invention. Therefore, the protection scope of the present invention is defined by the appended claims.

## Claims

1. A heat insulation plate raw material composition, the components in parts by weight thereof comprising 60 to 80 parts of a siliceous substance, 17 to 28 parts of a binder, 5 to 8 parts of polystyrene particles, and 20 to 60 parts of water, wherein the binder comprises calcium oxide and/or calcium hydroxide.

2. A heat insulation plate raw material composition, the components in parts by weight thereof composed of 60 to 80 parts of a siliceous substance, 17 to 28 parts of a binder, 5 to 8 parts of polystyrene particles, and 20 to 60 parts of water, wherein the binder comprises calcium oxide and/or calcium hydroxide.

3. The heat insulation plate raw material composition of claim 1 or 2, wherein the heat insulation plate raw material composition further includes additives; and the additives are selected from the group consisting of water reducing agent, water repellent, redispersible latex powder, cellulose ether, graphite and foaming agent.

4. The heat insulation plate raw material composition of claim 1 or 2, wherein the amount of the siliceous substance is 70 to 80 parts;
and/or, the amount of the binder is 18-28 parts;
and/or, the amount of the polystyrene particles is 7 to 8 parts;
and/or, the amount of water is 20 to 30 parts.

5. The heat insulation plate raw material composition of claim 1 or 2, wherein the amount of the siliceous substance is 70 to 75 parts;
and/or, the amount of the binder is 18-19 parts;
and/or, the amount of the polystyrene particles is 7 to 7.5 parts;
and/or, the amount of water is 25 to 30 parts.

6. The heat insulation plate raw material composition of claim 3, wherein the raw material composition comprises the components in parts by weight as follows 70 to 80 parts of the siliceous substance, 17 to 19 parts of the calcium oxide and/or calcium hydroxide, 5 to 8 parts of the polystyrene particles, 20 to 30 parts of the water, 2 to 4 parts of the cellulose ether, and 1 to 1.5 parts of the water reducing agent.

7. A heat insulation plate, the raw materials of which are as those of any one of claims 1-6, and the heat insulation plate is prepared according to the method I or method II:
Method I: the pre-mixed raw material composition of the heat insulation plate is pressurized, heated, and solidified in the mold;
Method II: the pre-mixed raw material composition of the heat insulation plate is first pressurized and maintained under pressure, and then heated, cured to shape in the mold.

8. A process of preparing a flexible heat insulation plate, wherein the raw material composition comprising 60-80 parts of siliceous substance, 17-28 parts of binder, 5-8 parts of polystyrene particles and 20-60 parts of water is mixed uniformly, and the mixture is put into the mold, the mold is kept under pressure after pressurization, and the mold is heated so that the temperature inside the mixture reaches 100-150°C, the pressure applied to the mold reaches 0.3MPa-235MPa, maintaining for more than 35 minutes, demolding and curing.

9. The process of preparing the heat insulation plate of claim 8, wherein the mold includes an upper mold and a lower mold, the upper mold and the lower mold are used to preliminarily shape the mixture, the mold is compressed until the mixture is compressed by 10-45% in the thickness direction to shape, and the upper mold and the lower mold are locked.

10. The process of preparing the heat insulation plate of claim 8, wherein the inside heating temperature subject to the mixture is 100-120°C.

11. The process of preparing the heat insulation plate of any one of claims 8-10, wherein the inside pressure subject to the mixture is 0.3 MPa to 1 Mpa.
